# EUROPÄISCHE PATENTSCHRIFT

(11) **EP 1 145 397 B1**
(45) Veröffentlichungstag und Bekanntmachung des Hinweises auf die Patenterteilung: **21.08.2002**
(21) Anmeldenummer: 99964414.9
(22) Anmeldetag: 10.12.1999
(51) Int. Cl.: H02G 1/10, F03D 11/04

(54) **VERFAHREN ZUM VERLEGEN VON ELEKTRISCHEN KABELN VON EINER ERSTEN OFFSHORE-WINDENERGIEANLAGE ZU EINER ZWEITEN OFFSHORE-WINDENERGIEANLAGE**
METHOD FOR LAYING ELECTRICAL CABLES FROM A FIRST OFFSHORE WIND POWER PLANT TO A SECOND OFFSHORE WIND POWER PLANT
PROCEDE POUR POSER DES CABLES ELECTRIQUES ENTRE UNE PREMIERE INSTALLATION D'ENERGIE EOLIENNE AU LARGE DES COTES ET UNE SECONDE INSTALLATION D'ENERGIE EOLIENNE AU LARGE DES COTES

(30) Priorität: 24.12.1998 DE 19860211
(43) Veröffentlichungstag der Anmeldung: 17.10.2001
(73) Patentinhaber: aerodyn Engineering GmbH, 24768 Rendsburg (DE)
(72) Erfinder: SIEGFRIEDSEN, Sönke, D-25840 Friedrichstadt (DE)
(74) Vertreter: Biehl, Christian, Dipl.-Phys.
(86) Internationale Anmeldenummer: DE9903945
(87) Internationale Veröffentlichungsnummer: WO00039903

(56) Entgegenhaltungen:
- WO-A-98/26177
- DE-A- 2 922 715
- DE-A- 3 224 976
- GB-A- 2 327 970

## Beschreibung

Die Erfindung betrifft ein Verfahren zum Verlegen von elektrischen Kabeln von einer ersten Offshore-Windenergieanlage zu einer zweiten Offshore-Windenergieanlage.

Dieses Verlegen tritt inbesondere dann als Problem auf, wenn ein Windenergiepark mit einer Vielzahl von Einzelanlagen und ggf. auch einem oder mehreren Sammelpunkten für den elektrischen Anschluß errichtet wird.

Das Verlegen von elektrischen Kabeln zwischen mehreren Offshore-Windenergieanlagen, deren Errichtung beispielsweise in der GB 2 327 970 A beschrieben ist, und die insbesondere auch in einer Vielzahl von nebeneinanderstehenden Anlagen errichtet werden, wenn genügend Platz zur Verfügung steht, ist aufwendig und kostenintensiv.

Bei jeder, vergleichsweise kurzen Verlegestrecke eines Kabels muß dieses von einem Vorrat abgelängt werden und an seinen beiden Endpunkten angeschlossen werden. Die Verlegung von Kabeln zwischen Offshore-Anlagen auf See erfolgt bisher durch große kabelverlegetaugliche Schiffe, die mit den erforderlichen Starkstromleitungen beladen sind und dicht an die vergleichsweise empfindlichen Türme der Windenergieanlagen manövriert werden müssen. Selbst wenn zusätzlich kleinere Boote und Taucher eingesetzt werden, muß das Kabel noch immer aufwendig und zeitintensiv in den ersten Turm (vorzugsweise im Bereich des Meeresbodens) eingefädelt werden, angeschlossen werden, zur nächsten Anlage verlegt werden (wobei das große Schiff zu manövrieren ist), abgelängt werden, und sodann wieder mit einem Taucher in den zweiten Turm einer Windenergieanlage unten eingebracht werden.

Dieses aufwendige Verlegen der Kabel stellt aufgrund der teuren Schiffsbetriebszeiten und der großen Anzahl des beschäftigten Personals einen ganz beträchtlichen Kostenfaktor dar, der in den Bereich der Montagekosten des Turmes selbst gelangt.

Die Erfindung selbst hat sich zur Aufgabe gestellt, ein Verfahren zum Verlegen von Kabeln zu schaffen, das den Aufwand und die Kosten deutlich verringert.

Erfindungsgemäß wird dies durch ein Verfahren mit den Merkmalen des Hauptanspruches gelöst. Die Unteransprüche geben vorteilhafte Ausführungsformen wieder.

Vorteilhaft ist insbesondere, daß das zu verlegende Kabel bereits in den Turm oder das Gründungsbauteil einer jeden Windenergieanlage vor deren Errichtung eingebracht wird, wobei dies an Land in einer Montagehalle oder dergleichen erfolgen kann oder problemlos mit der Endmontage vor Errichten des Turms selbst erfolgen kann.

Jede Anlage enthält dann die erforderliche Kabelart und Kabellänge die notwendig ist, um sie mit der nächsten Anlage oder einem Sammelpunkt zu verbinden. Falls mehrere Verbindungen gewünscht sein sollten, ist dies auch problemlos realisierbar.

Gleichfalls ist der Transport des Kabels dann als integraler Bestandteil des Turms kein Problem mehr, es wird bereits in der richtigen Länge am richtigen Ort zur Verfügung stehen, ohne daß es eines logistischen zusätzlichen Aufwandes bedarf.

Beim Errichten einer jeden Windenergieanlage befindet sich das Kabel damit an den richtigen Ort, wobei es bereits mit einem Ende elektrisch angeschlossen sein kann, aber nicht sein muß, da dies, wenn das Kabelende im Bereich des elektrischen Anschlusses liegt, kein großes Problem mehr ist. Ein zweites freies Ende des Kabels kann nun nach Verbringen einer Schleppleine zu der Ziel-Windenergieanlage einfach zu dieser gezogen werden, ohne daß es (außer für das Ausbringen der Schleppleine) eines Bootes bedarf.

Auf diese Weise werden die Anlagen elektrisch bis zu einem Sammelpunkt untereinander verbunden.

Vorteilhafterweise wird mit einer an einer Ausbringöffnung vorgesehenen Umlenkrolle das Kabel ohne Beschädigungen aus dem Turm der jeweiligen Windenergieanlage herausgezogen werden können, ohne daß eine Bedienperson an diesem Ort anwesend sein muß. Etwaige Verdrehungen des Kabels können dadurch vermieden werden, daß dieses entsprechend gelegt ist, oder in dem eine Trommel in dem Turm der Windkraftanlage drehbar angeordnet ist, von der das Kabel abspult.

Während des Überbringens des Kabels zur Zielwindkraftanlage kann das Kabelende mit einem Schwimmer angehoben werden, so daß der Reibungswiderstand am Boden des Meeres und die Gefahr des Verklemmens an etwaigen Hindernissen vermieden wird. Gleichfalls können eine Mehrzahl von Schwimmern am Kabel angeordnet sein, die dieses insgesamt vom Boden abheben, wobei später Leinen gekappt werden können, oder die Schwimmer geflutet werden können, um das Kabel auf den Boden absinken zu lassen.

Weitere Vorteile und Merkmale der Erfindung ergeben sich aus nachfolgender Beschreibung eines bevorzugten Ausführungsbeispiels. Dabei zeigt :

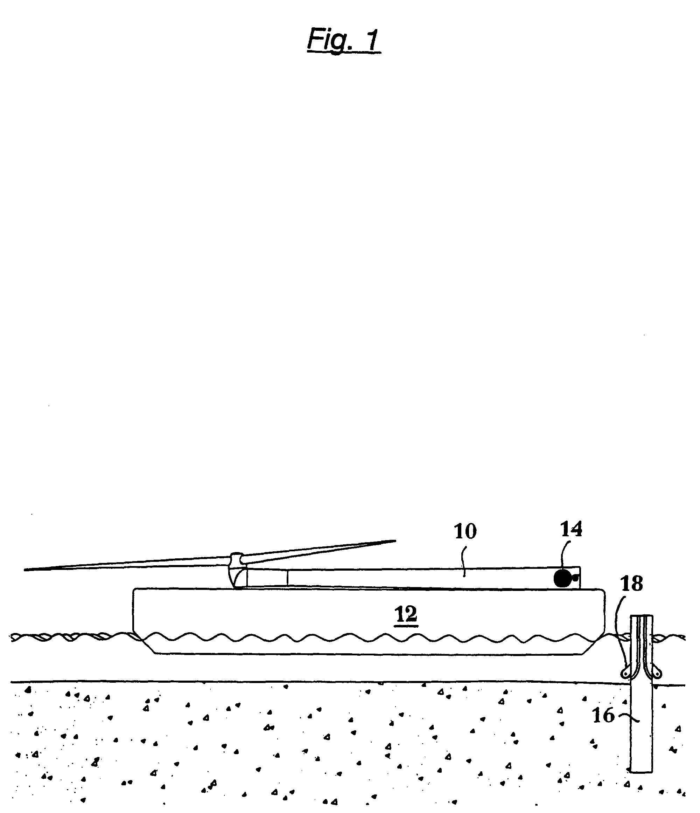

- Fig. 1: eine schematische Darstellung der Errichtung der ersten Offshore-Windenergieanlage, wobei der Turm liegend auf einem Schiff befindlich dargestellt ist,
- Fig. 2: eine schematische Darstellung des Ziehens des elektrischen Kabels von einer ersten Windenergieanlage, Gründungsbauteil einer zweiten Windenergieanlage, und
- Fig. 3: eine schematische Darstellung des verlegten Kabels zwischen einer ersten und einer zweiten Windenergieanlage, wobei aus der zweiten Windenergieanlage erneut ein Kabel zu einer dritten Windenergieanlage verlegt wird.

Das in den Figuren beispielhaft dargestellte Verfahren zum Verlegen elektrischer Kabel insbesondere innerhalb eines Offshore-Windenergieparks zwischen einer Mehrzahl von Windenergieanlagen schlägt vor, daß das zu verlegende Kabel 14 bereits vor Errichtung des Turms einer ersten Windenergienlage 10 in das Gründungsbauteil 16 oder in den Turm der ersten Windenergieanlage 10 eingebracht wird, wobei dies vorteilhafterweise bereits an Land geschehen kann. Damit kann in einem Arbeitsgang sowohl der Turm wie auch das Kabel 14 an den Ort der Errichtung gebracht werden, und es erübrigt sich ein ansonsten nötiges Manövrieren eines großen Kabelverlegeschiffes an zunächst die erste errichtete Windkraftenergieanlage und dann an die zweite Windkrafternergieanlage, wobei diese insbesondere bei höheren Wellen durch das Schiff Beschädigungen erleiden können.

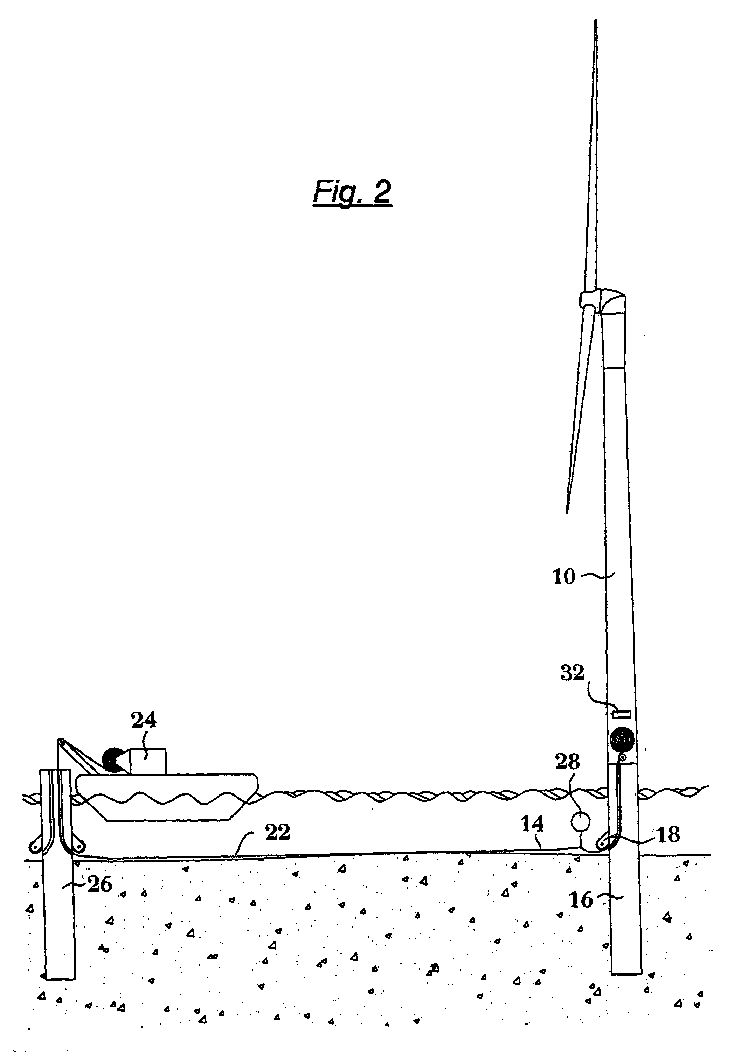

Weiter ist es, wie in der Fig. 2 erkennbar, ohne großen Aufwand möglich, über eine Winde 24, die entweder auf dem Gründungsbauteil 26 der zweiten Windkraftenergieanlage 20 vorgesehen werden kann oder auch auf einem kleinen Arbeitsboot, eine zuvor ausgebrachte Schleppleine 22 aufzuwickeln, um so das Kabel 14, das vorteilhafterweise mit einem Schwimmer 28 an seinem Kabelende vom Meeresboden ferngehalten wird, in die zweite Windkraftenergieanlage 20 oder dessen Gründungsbauteil 26 einzuziehen. Hierbei kann der Turm der zweiten Windkraftenergieanlage 20 bereits ausgebaut sein, oder, wie in der Fig. 2 dargestellt, lediglich das Gründungsbauteil 26.

Beim Errichten des Turmes der zweiten Windkraftenergieanlage 20 wird dann ein weiteres Kabel 14 für die Verbindung zu einer dritten Windkraftenergieanlage mit aufgebaut. Das eingezogene erste Kabel 14 muß dann nur noch angeschlossen werden.

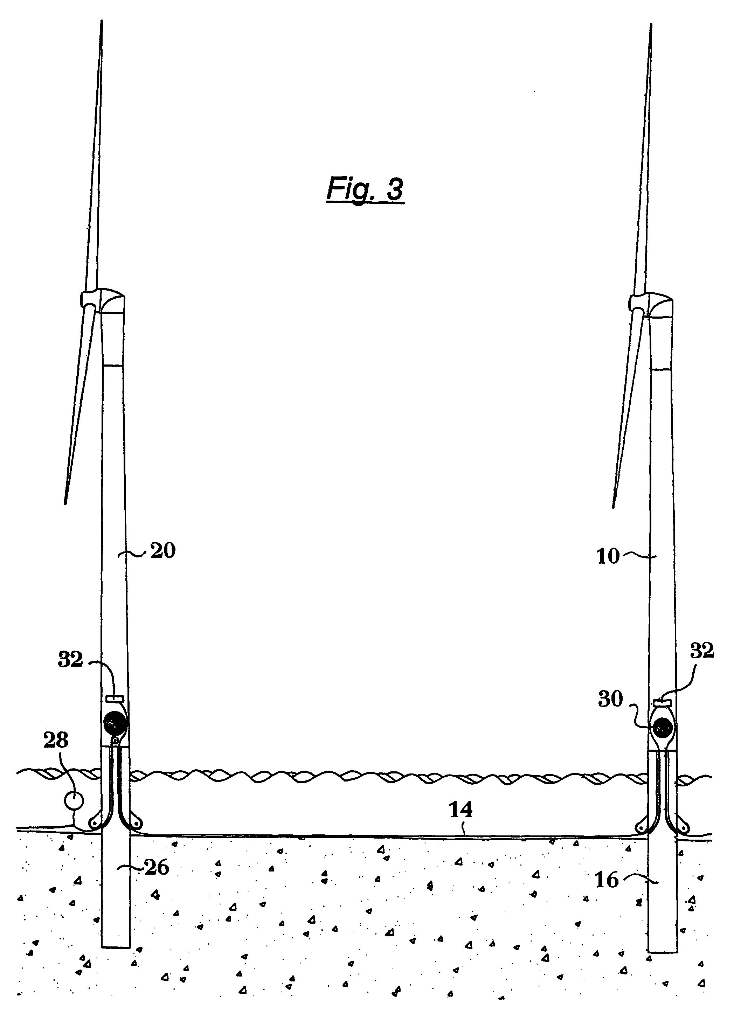

Vorteilhaft ist ferner die Vorsehung von Umlenkrollen 18 in den Gründungsbauteilen 16, 26, wie in Fig. 3, wobei diese vorteilhafterweise geringfügig über dem Meeresboden angeordnet sind, um dem Kabel später eine optimale Lage zu gewährleisten. In den Türmen oder den Gründungsbauteilen gelagertes Kabel 14 kann dabei entweder meanderförmig gelegt oder auf einer Trommel 30 aufgewickelt sein. Mit Bezugszeichen 32 ist der Anschlußort für die elektrische Verbindung der Kabel 14 in den Türmen der Windenergieanlagen bezeichnet.

## Patentansprüche

1. Verfahren zum Verlegen von elektrischen Kabeln von einer ersten Offshore-Windenergieanlage (10) zu einer zweiten Offshore-Windenergieanlage (20),
**gekennzeichnet durch**
- Einbringen des zu verlegenden Kabels (14) in den Turm oder das Gründungsbauteil (16) der ersten Offshore-Windenergieanlage (10) vor deren Errichtung,
- Errichten wenigstens des Gründungsbauteils (16) der ersten Offshore-Windenergieanlage (10),
- Verbringen einer Schleppleine (22) von der ersten Windenergieanlage (10, 20) zu der zweiten Windenergieanlage (20, 10), und
- Ziehen des führenden Endes des Kabels (14) von der ersten Windenergieanlage (10) zu der zweiten (20) Windenergieanlage unter Ausfahrenlassen des Kabels (14) aus dem Turm oder dem Gründungsbauteil (16) der ersten Windenergieanlage (10).

2. Verfahren nach Anspruch 1, **dadurch gekennzeichnet, daß** das elektrische Kabel (14) in dem Turm oder dem Gründungsbauteil (16) der ersten Windenergienanlage (10) meanderförmig gelegt wird.

3. Verfahren nach Anspruch 1, **dadurch gekennzeichnet, daß** das elektrische Kabel (14) in dem Turm oder dem Gründungsbauteil (16) der ersten Windenergienanlage (10) auf einer Trommel (30) aufgewickelt wird.

4. Verfahren nach einem der vorangehenden Ansprüche, **dadurch gekennzeichnet, daß** das elektrische Kabel (14) über eine an dem Turm oder Gründungsbauteil (16) der ersten Windenergieanlage (10) angebrachte Umlenkrolle (18) geführt wird.

5. Verfahren nach Anspruch 1, **dadurch gekennzeichnet, daß** wenigstens an dem führenden Ende des elektrischen Kabels (14) ein Schwimmer (28) angebracht wird.

6. Verfahren nach einem der vorangehenden Ansprüche, **dadurch gekennzeichnet, daß** das elektrische Kabel (14) in das Gründungsbauteil (16) oder den Turm der zweiten Offshore-Windenergieanlage (20) über eine in den Bereich der zweiten Offshore-Windenergieanlage (20) verbrachte Winde (24) vor Errichtung des Turms der zweiten Offshore-Windenergieanlage (20) gezogen wird.

## Claims

1. Method for laying electric cables from a first offshore wind power plant (10) to a second offshore wind power plant (20),
**characterized by**
- introducing the cable (14) to be laid into the tower or foundation component (16) of the first offshore wind power plant (10) prior to the erection thereof,
- erecting at least the foundation component (16) of the first offshore wind power plant (10),
- bringing a tow line (22) from the first wind power plant (10, 20) to the second wind power plant (20, 10) and
- pulling the leading end of the cable (14) from the first wind power plant (10) to the second wind power plant (20), whilst allowing the cable (14) to pass out of the tower or foundation component (16) of the first wind power plant (10).

2. Method according to claim 1, **characterized in that** the electric cable (14) is laid in meandering manner in the tower or the foundation component (16) of the first wind power plant (10).

3. Method according to claim 1, **characterized in that** the electric cable (14) is wound onto a drum (30) in the tower or the foundation component (16) of the first wind power plant (10).

4. Method according to one of the preceding claims, **characterized in that** the electric cable (14) is guided by a guide pulley (18) fitted on the tower or foundation component (16) of the first wind power plant (10).

5. Method according to claim 1, **characterized in that** a float (28) is fitted at least to the leading end of the electric cable (14).

6. Method according to one of the preceding claims, **characterized in that** the electric cable (14) is drawn into the foundation component (16) or the tower of the second offshore wind power plant (20) by means of a winch (24) located in the vicinity of the second offshore wind power plant (20), prior the erection of the tower of the second wind power plant (20).

## Revendications

1. Procédé pour la pose de câbles électriques depuis une première installation d'éolienne au large des côtes (10) jusqu'à une deuxième installation d'éolienne au large des côtes (20), **caractérisé par** les étapes consistant à:
- mettre en place le câble (14) à poser dans le pylône de support ou la partie de fondation (16) de la première installation d'éolienne au large des côtes (10) avant son érection,
- ériger au moins la partie de fondation (16) de la première installation d'éolienne au large des côtes (10),
- acheminer un câble de traction (22) depuis la première installation d'éolienne au large des côtes (10, 20) jusqu'à la deuxième installation d'éolienne au large des côtes (20, 10), et
- tirer l'extrémité de tête du câble (14) depuis la première installation d'éolienne au large des côtes (10) jusqu'à la deuxième installation d'éolienne au large des côtes (20) en faisant sortir le câble (14) hors du pylône de support ou de la partie de fondation (16) de la première installation d'éolienne au large des côtes (10).

2. Procédé selon la revendication 1, **caractérisé en ce que** le câble électrique (14) est placé en lacets dans le pylône de support ou la partie de fondation (16) de la première installation d'éolienne au large des côtes (10).

3. Procédé selon la revendication 1, **caractérisé en ce que** le câble électrique (14) est enroulé sur un tambour (30) dans le pylône de support ou la partie de fondation (16) de la première installation d'éolienne au large des côtes (10).

4. Procédé selon l'une des revendications précédentes, **caractérisé en ce que** le câble électrique (14) est guidé sur une poulie de renvoi (18) installée sur le pylône de support ou la partie de fondation (16) de la première installation d'éolienne au large des côtes (10).

5. Procédé selon la revendication 1, **caractérisé en ce qu'**un flotteur (28) est installé au moins sur l'extrémité de tête du câble électrique (14).

6. Procédé selon l'une des revendications précédentes, **caractérisé en ce que** le câble électrique (14) est tiré dans la partie de fondation (16) ou le pylône de support de la deuxième installation d'éolienne au large des côtes (20) par un treuil (24) installé dans la région de la deuxième installation d'éolienne au large des côtes (20) avant l'érection du pylône de support de la deuxième installation d'éolienne au large des côtes (20).
